# EUROPEAN PATENT APPLICATION

(11) **EP 1 545 132 A1**
(43) Date of publication of application: **22.06.2005**
(21) Application number: 03293269.1
(22) Date of filing: 19.12.2003
(51) Int. Cl.: H04N 7/173

(54) **An interactive digital television broadcast system**

(71) Applicant: ALCATEL, 75008 Paris (FR)
(72) Inventor: Trappeniers, Lieven Leopold Albertine, 2200 Herentals (Noorderwijk) (BE); Godon, Marc Bruno Frieda, 1840 Londerzeel (BE); Handekyn, Koen, 9000 Gent (BE)
(74) Representative: Narmon, Gisèle Marie Thérèse

(57) **Abstract**

The present invention relates to an interactive digital television broadcast system that comprises a broadcast operator adapted to send towards a plurality of subscriber units a downstream digital broadcast stream, which is received from an interactive digital television provider. The digital broadcast stream is displayed at the plurality of subscriber units. The interactive digital television broadcast system further comprises an interaction return channel operator for providing interactivity between the plurality of subscriber units and the interactive digital television provider by means of a bi-directional interaction return channel. The system further comprises a content injection module for injecting content provided by subscriber units of the plurality of subscriber units in displayed content of a subscriber unit of the plurality of subscriber units and a shared content retrieving module for retrieving references of content shared by subscriber units of the plurality of subscriber units together with meta-data of the shared content. The system further comprises a shared content-matching module for determining relevant content from the content shared by the subscriber units of the plurality of subscriber units by matching the meta-data of the content shared with at least one predetermined criterion and a content suggestion module for suggesting to the subscriber unit to inject the relevant content in the content displayed at the subscriber unit.

## Description

The present invention relates to an interactive digital television broadcast system (IDTVS) as described in the preamble of claim 1 and the related devices as described in the preamble of claim 5 to claim 8.

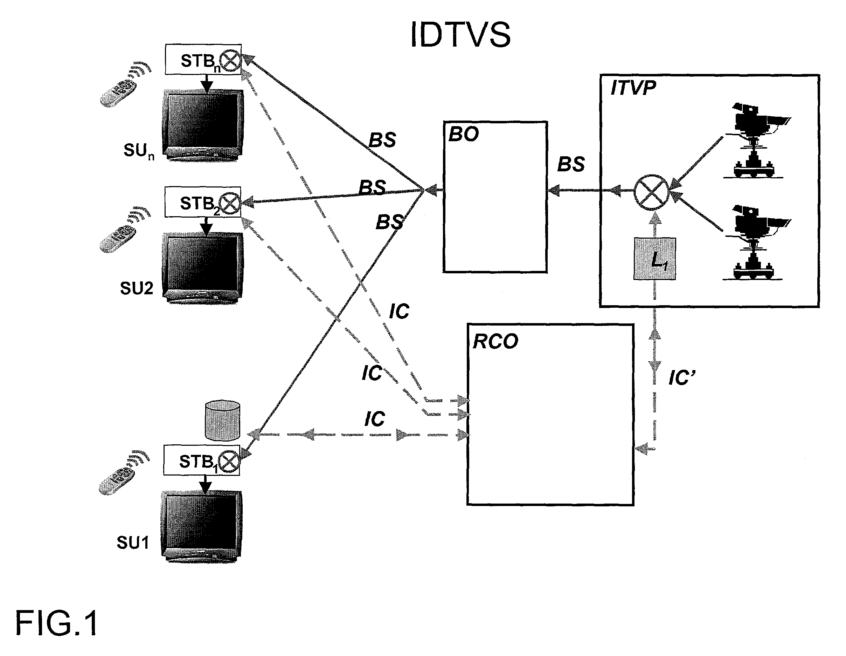

Such an interactive Digital Television iDTV systems as shown in Fig. 1 is generally known in the art. This interactive Digital Television iDTV system contains an iDTV provider iTVP that sends a downstream digital broadcast stream BS, where the digital broadcast stream BS comprises a combination of a digital video signal and a program logic, to a broadcast operator BO. The broadcast operator BO broadcasts the digital stream to the subscribers, either by satellite, cable, terrestrial broadcasting or over a broadband (possibly IP) internet infrastructure like ADSL, VDSL, etc. The consumer has a digital set-top box that decomposes the stream into a video signal and interaction logic. The interaction logic is executed on the set-top box and allows the user to interact. The combination of the video stream and the graphical elements of the user consuming (interacting with) the program logic is then send to the TV set for visualisation. Interactivity is provided by means of a bi-directional interaction channel IC. This return channel IC, provided by a return channel operator RCO, can be narrow-band dial-up, broadband DSL, leased-line, wireless, IP, or non-IP. The return channel operator RCO is transparent for the interaction channel; the RCO only provides transport.

The interaction channel IC' is terminated at the iTV provider ITVP by server-side logic L1 that is able to interpret the upstream signals sent by the set-top box STB over the interaction channel IC. This network-side counterpart L1 of the program logic that is executing on the set-top box is able to influence both the video and the logic component of the downstream broadcast BS and can also send information back to the user over the interaction channel IC. In order to empower the end-user to actively contribute to an iTV experience by sharing personal content such as movies, real-time video streams, voice, text, pictures, messaging, etc with a group of users a content injector module adapted to inject content in the displayed content of a user is included in the interactive digital television broadcast system IDTVS. Possible implementations of content injection modules are a module in the network that embeds the to-be-injected content in the broadcast stream (with an annotation/address), a module in the network that sends the content to the STB over the out-of-band interaction channel for automatic inclusion (push), a module at the STB that gets the content over the IC and includes it in the displayed content (pull).

The broadcast additionally comprises broadcast meta-data comprising keywords such as subject, category, director, location, time-stamp, weather conditions, producer, actors, summary all related to the current broadcast stream. This broadcast meta-data may originate from the broadcaster, a broadcast-stream processor extracting meta-information from the broadcast video-stream or even a third party such as a multimedia encyclopaedia.

Furthermore there is an availability of user profiles & events (actions) provided by the user. These comprise keywords, preferences, interests, history of viewed broadcasts, summary of shared content, etc.

The known interactive Digital Television IDTV system only allows injecting content in iTV broadcasts that is proposed by members of the group. The initiative of injecting content however is not on the side of the user watching the broadcast but on the hand of the members injecting data. Hence, it is not possible to automatically suggest content for injection in the broadcast where selection of such injection is on initiative of the user.

An object of the present invention is to provide a interactive Digital Television IDTV system of the above known type but which is adapted to enable a user selection of content shared by subscriber units of a plurality of subscriber for injecting in the broad cast stream of the user on demand of the user.

According to the invention, this object is achieved by the known interactive Digital Television IDTV system as described in claim 1 and the related devices as described in claim 5 to claim 8.

Indeed, by providing the known interactive Digital Television IDTV system with a shared content retrieving module for retrieving references of content shared by subscriber units of the plurality of subscriber units together with meta-data of the shared content and a shared content matching module for determining the relevant content from the retrieved content, shared by the subscriber units of the plurality of subscriber units by matching the meta-data of the content shared, with at least one predetermined criterion and furthermore a content suggestion module for suggesting to the subscriber unit to inject this relevant content in the content currently displayed at the subscriber unit, the user at the subscriber unit is able to select content from content shared by subscriber units of the plurality of subscriber units based on the available content and the preferences of the user.

Another characteristic feature of the present is described in claim 2.

The predetermined criterion is the content of a user profile of the subscriber unit of the plurality of subscriber units and hence the shared content matching module for determines the relevant content from the retrieved, content shared by the subscriber units of the plurality of subscriber units by matching the meta-data of the content shared, data of said content shared with a user profile of the subscriber unit of the plurality of subscriber units.

A further characteristic feature of the present is described in claim 3.

The predetermined criterion is meta-data included in the broadcast and hence the shared content matching module for determines the relevant content from the retrieved, content shared by the subscriber units of the plurality of subscriber units by matching the meta-data of the content shared with meta-data included in the broadcast.

An additional characteristic feature of the present is described in claim 4.

The predetermined criterion is a user profile of the subscriber unit of the plurality of subscriber units together with meta-data included in the broadcast and hence the shared content matching module determines the relevant content from the retrieved, content shared by the subscriber units of the plurality of subscriber units by matching the meta-data of the content shared with a user profile of the subscriber unit of the plurality of subscriber units together with meta-data included in the broadcast.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a interactive Digital Television IDTV system of the present invention
Fig. 2 represents the return channel operator RCO of the interactive Digital Television IDTV system as presented in Fig. 1.

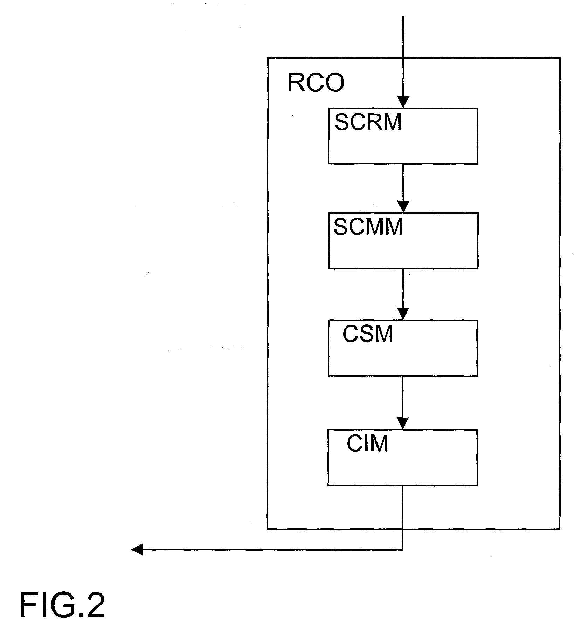

In the following paragraphs, referring to the drawings, an implementation of the interactive Digital Television IDTV system according to the present invention will be described. In the first paragraph of this description the main elements of the interactive Digital Television IDTV system as presented in FIG. 1 are described. In the second paragraph, all connections between the before mentioned elements and described means are defined. Subsequently all relevant functional means of the return channel operator RCO of the interactive Digital Television IDTV system as presented in FIG.2 are described followed by a description of all interconnections. In the succeeding paragraph the actual execution of the method for session establishment is described.

Such an interactive Digital Television IDTV system comprises an iDTV provider iTVP for sending a downstream digital broadcast stream BS, where the digital broadcast stream BS comprises a combination of a digital video signal and a program logic, to a broadcast operator BO, a broadcast operator BO for broadcasting this a digital stream BS to the subscriber units SU1..SUn. The subscriber units SU1..SUn each comprise a respective digital set-top box STB₁..STBₙ for decomposing the stream into the video signal and the mentioned interaction logic and a Television set. The digital set-top boxes STB₁..STBₙ are further adapted to execute the interaction logic for enabling the user to interact. Furthermore there is a return channel operator RCO for providing transport of interaction data. Additionally there is a content injector module for injecting content, e.g. by embedding the to-be-injected content in the broadcast stream (with an annotation/address), in the displayed content of a user is added.

The interactive Digital Television iDTV system is coupled to the broadcast operator BO over a link that forms part of a content distribution network interconnecting many iDTV systems to many broadcast operators BO.

The broadcast operator BO is further coupled to the subscribers units SU1..SUn, over a tree-structured link. This tree-structures link may for instance be satellite, cable, a terrestrial broadcasting link or a broadband (possibly IP) internet infrastructure like ADSL or VDSL.

Interactivity is provided by means of a bi-directional interaction channel. This return channel, provided by a return channel operator RCO, can be narrow-band dial-up, broadband DSL, leased-line, wireless, IP, or non-IP. The return channel operator RCO is coupled over an interaction channel IC to the iTV provider ITVP. The return channel operator RCO is further coupled over a tree-structured links IC to the subscriber units SU1..SUn. This return channel IC, can be narrow-band dial-up, broadband DSL, leased-line, wireless, IP, or non-IP.

The return channel operator RCO of the interactive Digital Television IDTV system comprises a content injection module CIM that is able to inject content provided by each of the subscriber units of the plurality of subscriber units in the displayed content of a certain subscriber unit of the plurality of subscriber units SU1..SUn. Furthermore the return channel operator RCO comprises a shared content retrieving module SCRM that is adapted to retrieve references of content shared by the subscriber units of the plurality of subscriber units SU1..SUn together with meta-data of the shared content and a shared content-matching module SCMM that is adapted to determine relevant content from the content shared by said subscriber units of said plurality of subscriber units by matching said meta-data of said content shared with at least one predetermined criterion. Additionally, the return channel operator comprises a content suggestion module CSM, that is able to suggest the subscriber unit to inject said relevant content in said content displayed at said subscriber unit.

Further it is to be remarked that the broadcast additionally comprises broadcast meta-data comprising keywords such as subject, category, director, location, time-stamp, weather conditions, producer, actors, summary all related to the current broadcast stream. This broadcast meta-data may originate from the broadcaster, a broadcast-stream processor extracting meta-information from the broadcast video-stream or even a third party such as a multimedia encyclopaedia.

Furthermore there is an availability of user profiles & events (actions) provided by the user. These comprise keywords, preferences, interests, history of viewed broadcasts, summary of shared content, etc.

The shared content retrieving module SCRM, of the return channel operator RCO has an input-terminal that is at the same time an input-terminal of the return channel operator RCO. The shared content retrieving module SCRM further is coupled with an output to an input of the shared content-matching module SCMM. The shared content-matching module SCMM is coupled with an output to an input of the content suggestion module CSM that further is coupled with an output to an input of the content injection module CIM. The content injection module CIM of has an output-terminal that is at the same time an output-terminal of the return channel operator RCO.

In order to explain the operation of the present invention it is assumed that a user of a subscriber unit SU1 is watching a certain documentary, e.g. a documentary about Barcelona. The meta-data included in the digital broadcast stream includes data referring to the subject Barcelona.

In the mean time the shared content retrieving module SCRM retrieves references of content shared by all subscriber units of the group SU1.SUn together with meta-data of the shared content. A list of references regarding different subjects will result. This list comprises a plurality of references to this content each provisioned by a subscriber unit of the group of subscriber units SU1..Sun. The content is stored together with the meta-data of the content, i.e. keywords relevant to the provisioned content. This process of retrieving references to content is a continuously ongoing process of gathering content made available to any subscriber unit of the plurality of subscriber units by a subscriber unit.

The shared content-matching module SCMM determines relevant content from the list of content shared by the subscriber units of the plurality of subscriber units by matching the meta-data of the shared content, i.e. the relevant keywords, of said content shared with the meta-data included in the digital broadcast stream. Now the meta-data includes keywords related to the city Barcelona. Hence the shared content-matching module SCMM determines all references to content that is related to Barcelona. The content suggestion module CSM, then suggests, by presenting the list on the screen of the monitor, the subscriber unit SU1 to inject a reference of the list of references related to the city Barcelona which are determined by the shared content-matching module SCMM in the content displayed at the subscriber unit SU1. The list does for instance include a series of holiday pictures and movies about Barcelona of a certain user corresponding to subscriber unit SU2.

The content injection module CIM may at acceptance of the user at the subscriber unit SU1 of a certain determined, relevant, reference from, the list of determined references inject this content in the displayed content of a the subscriber unit SU1. Hence at acceptance, the user can watch the photos, movies and personal annotations user of subscriber unit SU2.

In this described embodiment the relevant content is selected from the entire shared content by matching meta-data of shared content with data related to the current broadcast being watched by the user.

In an alternative embodiment this matching may be solely performed based on user preferences, i.e. a certain interest of the user, independent of the currently watched broadcast.

In a further alternative embodiment the relevant content is selected from the entire shared content by matching meta-data of shared content with meta-data of the current digital broadcast being watched by the user together with the user preferences of the user, i.e. a certain interest of the user. Hence the selection of shared content to inject in the current digital broadcast stream is made based on the content of the current broadcast together with user preferences indicating the interest of the user.

Each module described above, i.e. the content injection module CIM, the shared content retrieving module SCRM, the shared content-matching module SCMM and the content suggestion module CSM may be implemented in the customer-premises (e.g. on the set-top box) in the network at the return-channel operator RCO, at the iTV provider ITVP, at the iTV broadcast operator BO or a combination of these.

Each module described above can be embodied as a central module and/or as many distributed modules (or a combination).

The deployment of the modules on the set-top box can be done either in band (in the MPEG video stream) or via the bi-directional interaction channel IC

The communication or content transfer between any modules can work in a "provisioning mode" where all data are fed into the module, a "subscription mode" where the module registers itself to a data-feed, a "request-response mode" where the module looks up the necessary content, a "Peer-to-Peer" (P2P) mode.

The personal content to be injected may also originate from the set-top box (movie fragment that was recorded earlier), a web-cam, a storage server in the network.

Note that the presence of the user sharing his content is not required. Even when not using his iTV set, his set-top box can participate in this scheme.

Also note that embodiments of the present invention can offer to the user the possibility to define which users' shared content is presented to him for inclusion. Such user group can be defined by enumeration (friends, family) or by specifying a profile ("Harry Potter fans").

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. An interactive digital television broadcast system (IDTVS) comprising a broadcast operator (BO) adapted to send towards a plurality of subscriber units (SU1..SUn) a downstream digital broadcast stream, received from an interactive digital television provider (iTVP), said digital broadcast stream being adapted to display on said plurality of subscriber units, said interactive digital television broadcast system further comprising an interaction return channel operator (RCO) adapted to provide interactivity between said plurality of subscriber units (SU1..SUn) and said interactive digital television provider (iTVP) by means of a bi-directional interaction return channel, said system further comprising:
a. a content injection module (CIM) adapted to inject content provided by subscriber units of said plurality of subscriber units in displayed content of a subscriber unit of said plurality of subscriber units, **CHARACTERISED IN THAT** said interactive digital television broadcast system additionally comprises:
b. a shared content retrieving module (SCRM), adapted to retrieve references of content shared by subscriber units of said plurality of subscriber units together with meta-data of said shared content;
c. a shared content-matching module (SCMM), adapted to determine relevant content from said content shared by said subscriber units of said plurality of subscriber units by matching said meta-data of said content shared with at least one predetermined criterion; and
d. a content suggestion module (CSM), adapted to suggest to said subscriber unit to inject said relevant content in said content displayed at said subscriber unit.

2. An interactive digital television broadcast system (IDTVS) according to claim 1, **CHARACTERISED IN THAT** said at least one predetermined criterion is a user profile of said subscriber unit of said plurality of subscriber units.

3. An interactive digital television broadcast system (IDTVS) according to claim 1, **CHARACTERISED IN THAT** said at least one predetermined criterion is meta-data included in said broadcast.

4. An interactive digital television broadcast system (IDTVS) according to claim 1, **CHARACTERISED IN THAT** said at least one predetermined criterion is a user profile of said subscriber unit of said plurality of subscriber units together with meta-data included in said broadcast.

5. Broadcast operator (BO), for use in an interactive digital television broadcast system (IDTVS) according to any of claim 1 to claim 4, **CHARACTERISED IN THAT** said broadcast operator (BO) comprises at least one module of said content injection module (CIM), said shared content retrieving module (SCRM), said shared content-matching module (SCMM) and said content suggestion module (CSM) of said interactive digital television broadcast system (IDTVS).

6. Interaction return channel operator (RCO), for use in an interactive digital television broadcast system (IDTVS) according to any of claim 1 to claim 4, **CHARACTERISED IN THAT** said Interaction return channel operator (RCO) comprises at least one module of said content injection module (CIM), said shared content retrieving module (SCRM), said shared content-matching module (SCMM) and said content suggestion module (CSM) of said interactive digital television broadcast system (IDTVS).

7. Subscriber unit (SU1..SUn), for use in an interactive digital television broadcast system (IDTVS) according to any of claim 1 to claim 4, **CHARACTERISED IN THAT** said Subscriber unit (SU1..SUn) comprises at least one module of said content injection module (CIM), said shared content retrieving module (SCRM), said shared content-matching module (SCMM) and said content suggestion module (CSM) of said interactive digital television broadcast system (IDTVS).

8. Interactive digital television provider (iTVP) for use in an interactive digital television broadcast system (IDTVS) according to any of claim 1 to claim 4, **CHARACTERISED IN THAT** said Interactive digital television provider (iTVP) comprises at least one module of said content injection module (CIM), said shared content retrieving module (SCRM), said shared content-matching module (SCMM) and said content suggestion module (CSM) of said interactive digital television broadcast system (IDTVS).
